# EUROPEAN PATENT APPLICATION

(11) **EP 3 447 835 A1**
(43) Date of publication of application: **27.02.2019**
(21) Application number: 17785981.6
(22) Date of filing: 18.04.2017
(51) Int. Cl.: H01M 8/18, B65D 90/12, H01M 8/24

(54) **REDOX FLOW BATTERY TRANSPORT STRUCTURE, REDOX FLOW BATTERY TRANSPORT METHOD, AND REDOX FLOW BATTERY**

(30) Priority: 20.04.2016 JP 2016084541
(71) Applicant: Sumitomo Electric Industries, Ltd., Osaka-shi, Osaka 541-0041 (JP)
(72) Inventor: MORIGAMI, Kenta, Osaka-shi Osaka 554-0024 (JP); IKEUCHI, Atsuo, Osaka-shi Osaka 554-0024 (JP); ADACHI, Toshihisa, Osaka-shi Osaka 554-0024 (JP)
(74) Representative: Boult Wade Tennant LLP
(86) International application number: PCT/JP2017/015633
(87) International publication number: WO 2017/183643

(57) **Abstract**

A redox flow battery transport structure includes a cell stack that includes a plurality of stacked layers of battery cells of a redox flow battery; a container in which the cell stack is housed; and a vibration absorbing member that vertically supports the cell stack from below in the container.

## Description

### Technical Field

The present invention relates to a redox flow battery transport structure, a redox flow battery transport method, and a redox flow battery.

The present application claims priority based on Japanese Application No. 2016-084541, filed April 20, 2016, the entire contents of which are incorporated herein by reference.

### Background Art

One of large capacity storage batteries that store new energy of solar photovoltaic power generation or wind power generation is an electrolyte-circulation battery, typically a redox flow battery. The redox flow battery is a battery that utilizes a difference in an oxidation-reduction potential between an ion contained in a positive electrolyte and an ion contained in a negative electrolyte to perform charging and discharging (refer, for example, to PTL 1).

### Citation List

### Patent Literature

PTL 1: Japanese Unexamined Patent Application Publication No. 2015-79738

### Summary of Invention

A redox flow battery transport structure according to the present disclosure includes:
a cell stack that includes a plurality of stacked layers of battery cells of a redox flow battery;
a container in which the cell stack is housed; and
a vibration absorbing member that vertically supports the cell stack from below in the container.

A redox flow battery transport method according to the present disclosure includes:
housing a cell stack that is vertically supported from below by a vibration absorbing member in a container, the cell stack including a plurality of stacked layers of battery cells of a redox flow battery; and transporting the container.

A redox flow battery according to the present disclosure includes:
a cell stack that includes a plurality of stacked layers of battery cells of a redox flow battery; and
a vibration absorbing member that vertically supports the cell stack from below. Brief Description of Drawings

[Fig. 1] Figure 1 is an illustration of an operational principle of a redox flow battery.
[Fig. 2] Figure 2 is a schematic illustration of a configuration of a cell stack.
[Fig. 3] Figure 3 is a schematic partial sectional view of a redox flow battery transport structure according to a first embodiment.
[Fig. 4] Figure 4 is a schematic partial sectional view of the redox flow battery transport structure viewed from the left side surface in Fig. 3.
[Fig. 5] Figure 5 is a schematic partial sectional view of a redox flow battery transport structure according to a second embodiment.

### Description of Embodiments

### [Technical Problem]

In recent years, an increased demand for redox flow batteries as storage means for new energy is expected. For example, constructing a solar photovoltaic power plant in an extensive non-residential area, such as a desert, and installing a redox flow battery therein are under consideration. Here, it is assumed that constituent members of the redox flow battery are transported by sea or transported by land on unpaved land, and there is a concern that the aforementioned constituent members may be damaged during transport under such severe transport conditions. However, a redox flow battery transport structure that is optimal under severe transport conditions has currently not been examined.

The present disclosure provides a redox flow battery transport structure, a redox flow battery transport method, and a redox flow battery which are capable of suppressing the redox flow battery from being damaged during transport even under severe transport conditions.

### [Advantageous Effects of Present Disclosure]

According to the aforementioned redox flow battery transport structure, it is possible to suppress a cell stack included in a redox flow battery from being damaged due to the vibration during transport.

According to the aforementioned redox flow battery transport method, it is possible to transport a cell stack of a redox flow battery while suppressing the cell stack included in the redox flow battery from being damaged.

According to the aforementioned redox flow battery, it is possible to suppress a cell stack from being damaged due to the vibration during transport.

### [Description of Embodiment of Invention of Present Application]

First, contents of an embodiment of the invention of the present application will be enumerated and described.

As measures for a case in which constituent members of a redox flow battery are housed in a container and transported, a measure of attaching a vibration control structure to a lower portion of the container is enumerated. In the measure, however, it is not possible to buffer stress that is applied to the constituent members of the redox flow battery present inside the container when transshipment and the like of the container is performed. However, attaching vibration control structures to all of the constituent members is not realistic in terms of labor and cost. Accordingly, the inventors of the present invention examined which of the constituent members of the redox flow battery the vibration control structure should be employed for when the redox flow battery is housed in a container and transported. As a result, the inventors of the present invention found that the vibration control structure is needed to be employed for a cell stack in which membranes, electrodes, and the like having comparatively low strength are stacked. On the basis of the finding, a redox flow battery transport structure according to an embodiment will be specified below.
<1> A redox flow battery transport structure according to an embodiment includes
   a cell stack that includes a plurality of stacked layers of battery cells of a redox flow battery,
   a container in which the cell stack is housed, and
   a vibration absorbing member that vertically supports the cell stack from below in the container.

Employing a member that vertically supports the cell stack from below as the vibration absorbing member makes it possible to suppress, even when the container is subjected to vibration or even when a shock is applied to the container, a large inertial force applied to the cell stack of the redox flow battery. As a result, it is possible to suppress the cell stack from being damaged during transport, and it is possible to smoothly install and operate the redox flow battery after transport.
<2> One aspect of the redox flow battery transport structure according to the embodiment is an aspect
   in which the vibration absorbing member is a damping rubber.

The damping rubber is capable of maintaining its vibration absorption ability for a long period and is thus desirable as the vibration absorbing member during transport. In particular, the damping rubber is capable of absorbing the vibration during transport, with certainty for a long period, when sea transport and long-haul land transport are performed.
<3> One aspect of the redox flow battery transport structure according to the embodiment is an aspect
   in which the vibration absorbing member is an air spring.

The air spring is capable of greatly attenuating large vibration and does not easily sympathetically vibrate, and the air spring is thus desirable as the vibration absorbing member during transport. In addition, the air spring has an advantage whereby it is possible to easily adjust the support height of the cell stack by adjusting the amount of air packed in the air spring.
<4> One aspect of the redox flow battery transport structure according to the embodiment is an aspect
   in which the cell stack includes a pair of end plates that hold and fasten a layered structure from both sides thereof, the layered structure including the plurality of stacked layers of battery cells, and
   in which each of the end plates includes, at a vertically lower portion thereof, an attachment portion to which the vibration absorbing member is attached.

The pair of end plates are for fastening a layered structure body including stacked layers of battery cells from both sides thereof to maintain the layered state of the layered structure body and thus have high strength and high rigidity. Therefore, the end plates are suitable for use as members on which an attachment portion of a vibration absorbing member that supports a heavy cell stack and that absorbs vibration is provided.
<5> A redox flow battery transport method according to the embodiment includes
   housing a cell stack that is vertically supported from below by a vibration absorbing member in a container, the cell stack including a plurality of stacked layers of battery cells of a redox flow battery; and transporting the container.

Vertically supporting the cell stack from below by the vibration absorbing member makes it possible to suppress, even when the container is subjected to vibration or even when a shock is applied to the container, a large inertial force applied to the cell stack of the redox flow battery. As a result, it is possible to suppress the cell stack from being damaged during transport, and it is possible to smoothly install and operate the redox flow battery after transport.
<6> A redox flow battery according to the embodiment includes
   a cell stack that includes a plurality of stacked layers of battery cells of a redox flow battery, and
   a vibration absorbing member that vertically supports the cell stack from below.

Vertically supporting the cell stack from below by the vibration absorbing member makes it possible to suppress the cell stack of the redox flow battery from being damaged due to the vibration during the transport of the redox flow battery.

### [Details of Embodiment of the Invention of the Present Application]

Hereinafter, embodiments of the transport structure and the transport method for the redox flow battery (RF battery) according to embodiments will be described. Note that the present invention is not limited to the configuration indicated in the embodiments; the present invention is indicated by the claims and intends to include all modifications within the meaning and scope equivalent to the claims.

### <First Embodiment>

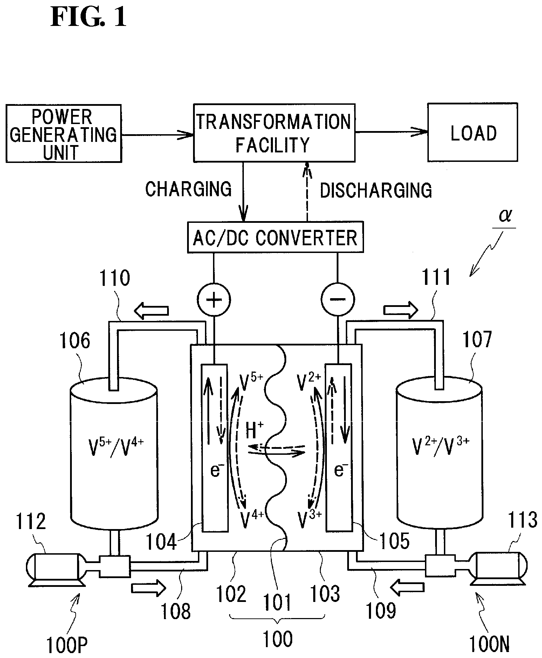

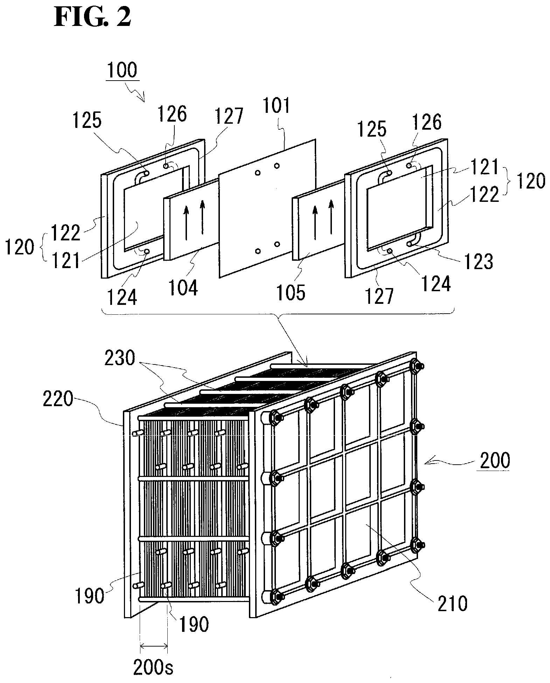

Prior to describing a RF battery transport structure 1 and a transport method according to the embodiment, a basic configuration of a RF battery α will be described on the basis of Figs. 1 and 2.

As shown in the illustration of the operational principle of the RF battery α in Fig. 1, the RF battery α includes a battery cell 100 in which a positive electrode cell 102 and a negative electrode cell 103 are separated from each other by a membrane 101 through which a hydrogen ion passes. The positive electrode cell 102 incorporates a positive electrode 104, and a positive electrolyte tank 106 that stores a positive electrolyte is connected to the positive electrode cell 102 via conduit pipes 108 and 110. The conduit pipe 108 is provided with a pump 112, and these members 106, 108, 110, and 112 constitute a positive electrolyte circulation mechanism 100P that circulates the positive electrolyte. Similarly, the negative electrode cell 103 incorporates a negative electrode 105, and a negative electrolyte tank 107 that stores a negative electrolyte is connected to the negative electrode cell 103 via conduit pipes 109 and 111. The conduit pipe 109 is provided with a pump 113, and these members 107, 109, 111, and 113 constitute a negative electrolyte circulation mechanism 100N that circulates the negative electrolyte. The electrolytes stored in the respective tanks 106 and 107 are circulated inside the cells 102 and 103 by the pumps 112 and 113 during charging and discharging. When charging and discharging are not performed, the pumps 112 and 113 are stopped, and the electrolytes are not circulated.

The aforementioned battery cell 100 is typically formed inside a structure body, which is called a cell stack 200, such as that shown in Fig. 2. The cell stack 200 is constituted by a layered structure, which is called a substack 200s, the substack 200s being held from both sides thereof by two end plates 210 and 220 and being fastened by fastening mechanisms 230 (in the illustrated configuration, a plurality of the substacks 200s are used). As shown in the upper illustration of Fig. 2, the substack 200s has a configuration in which a layered body is held between supply/discharge plates 190 and 190 (refer to the lower illustration of Fig. 2), the layered body including layers of stacked cell units that are each constituted by a cell frame 120, the positive electrode 104, the membrane 101, the negative electrode 105, and a cell frame 120. Each of the cell frames 120 included in the cell units includes a frame body 122 that has a through window and a bipolar plate 121 that closes the through window, the positive electrode 104 is arranged on one surface of the bipolar plate 121 so as to be in contact therewith, and the negative electrode 105 is arranged on the other surface of the bipolar plate 121 so as to be in contact therewith. In this configuration, the battery cell 100 is formed one each between the bipolar plates 121 of the cell frames 120 adjacent to each other.

The circulation of the electrolyte to the battery cell 100 via the supply/discharge plates 190 and 190 is performed using liquid supply manifolds 123 and 124 and liquid discharge manifolds 125 and 126 that are formed in each frame body 122. The positive electrolyte is supplied from the liquid supply manifold 123 via an inlet slit formed on one surface side (front side of the figure) of each frame body 122 to the positive electrode 104 and is discharged via an outlet slit formed in an upper portion of each frame body 122 to the liquid discharge manifold 125. Similarly, the negative electrolyte is supplied from the liquid supply manifold 124 via an inlet slit (indicated by broken lines) formed on the other surface side (rear side of the figure) of each frame body 122 to the negative electrode 105 and is discharged via an outlet slit (indicated by broken lines) formed in the upper portion of each frame body 122 to the liquid discharge manifold 126. A ring-shaped sealing member 127, such as an O-ring or a flat packing, is arranged between the cell frames 120 so that leakage of the electrolytes from the substacks 200s is suppressed.

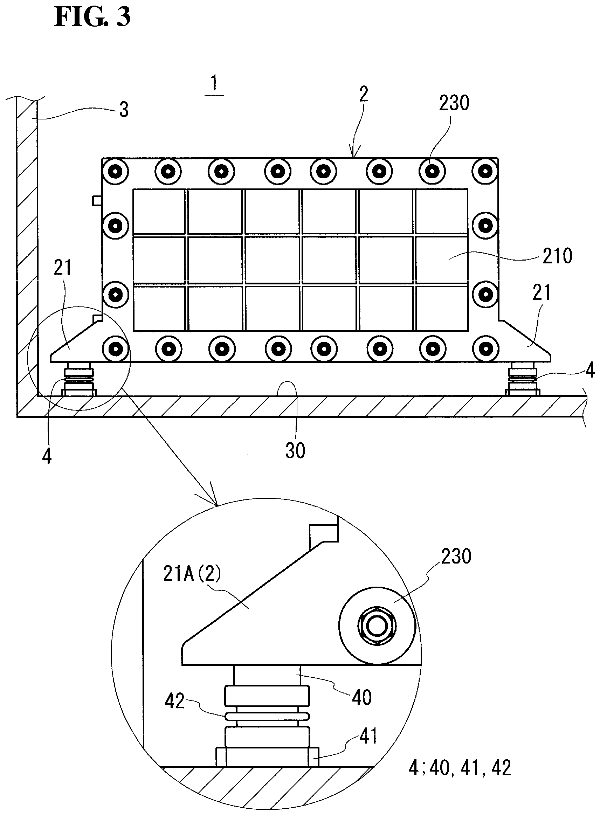

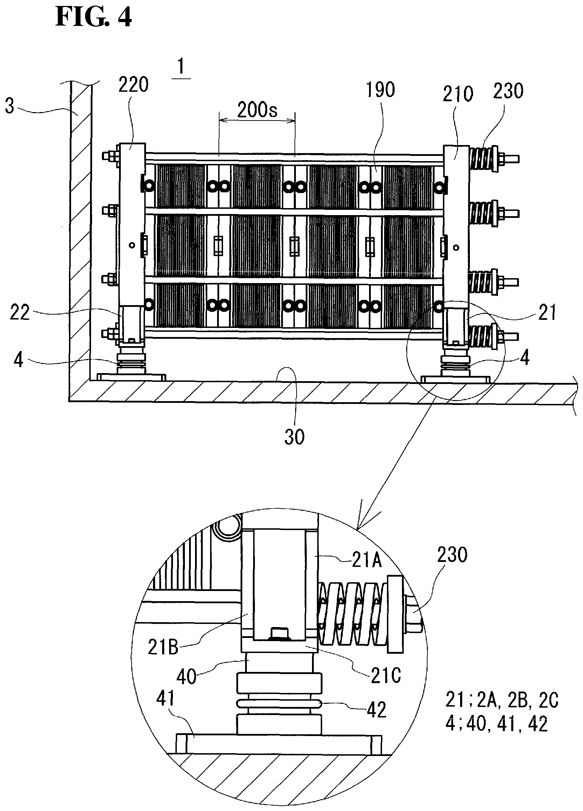

Next, the RF battery transport structure 1 according to the embodiment will be described on the basis of Figs. 3 and 4. The RF battery transport structure 1 includes a cell stack 2, a container 3, and vibration absorbing members 4. When the cell stack 2 of the RF battery is transported, the container 3 in which the cell stack 2 is housed is transported. Hereinafter, each constituent of the RF battery transport structure 1 will be described in detail.

### <<Cell Stack>>

The basic configuration of the cell stack 2 shown in Figs. 3 and 4 is similar to that of the typical cell stack 200 described with reference to Fig. 2. Members that have functions identical to those of the constituent members of the cell stack 200 are given reference signs identical to those of the constituent members of the cell stack 200, and detailed description thereof will be omitted.

As described above, the cell stack 2 is formed, as shown in Fig. 2, by a plurality of stacked layers of the substacks 200s that each include a plurality of stacked layers of the battery cells held between the supply/discharge plates 190. The plurality of substacks 200s are held between the pair of end plates 210 and 220 and fastened.

The end plate 210 (220; refer to Fig. 4) of the present example includes, at a vertically lower end portion thereof, a pair of attachment portions 21 (22; refer to Fig. 4) extending in the width direction (left-right direction in Fig. 3) of the end plate 210 (220). That is, the cell stack 2 includes four of the attachment portions 21 and 22 in total. The vibration absorbing members 4, which will be described later, are attached to these attachment portions 21 and 22.

As shown in the circled enlarged view in Fig. 4, each of the attachment portions 21 is constituted by two triangular plate portions 21A and 21B that have a right-angled triangle shape (refer to Fig. 3) and that are separated from each other in the thickness direction of the end plate 210; and a rectangular plate portion 21C that connects the lower ends of the two triangular plate portions 21A and 21B to each other. The triangular plate portion 21A is connected to one surface (surface on the right side of the figure) of the end plate 210 with no level difference, and the triangular plate portion 21B is connected to the other surface (surface on the left side of the figure) of the end plate 210 with no level difference. In addition, the rectangular plate portion 21C includes a bolt hole into which a bolt for fixing the vibration absorbing member 4, which will be described later, is to be inserted. Note that the attachment portion 22 also has a configuration similar to that of the attachment portion 21.

### «Container»

As the container 3, a container of an existing standard (for example, 40-feet container for transport) is usable. At least the cell stack 2, among the constituent members of the redox flow battery, is housed inside the container 3. The cell stack 2 may be directly placed, as shown, on a container bottom surface 30 of the container 3 or may be placed on a base of a certain type.

It is acceptable that a complete set of the constituent members of the redox flow battery is housed inside the container 3. Specifically, it is possible to enumerate a mode in which, in addition to the aforementioned cell stack 2, the circulation mechanisms 100P and 100N, which have been described with reference to Fig. 1, a control mechanism that controls the circulation and the like of the electrolytes, and the like are housed inside the container 3. Note that it is suitable to separately transport the electrolytes without placing the electrolytes in the tanks 106 and 107.

### «Vibration Absorbing Member»

The vibration absorbing member 4 is a member that absorbs the vibration of the container 3 when the container 3 is subjected to vibration or when a shock is applied to the container 3. The vibration absorbing member 4 is provided one each on the attachment portions 21 and 22 provided on the end plates 210 and 220.

In the present example, an air spring is employed as the vibration absorbing member 4. The air spring 4 is capable of greatly attenuating large vibration and does not easily sympathetically vibrate, and the air spring 4 is thus capable of effectively suppressing the vibration of the cell stack 2 during transport. In addition, the air spring 4 has an advantage whereby it is possible to easily adjust the support height of the cell stack 2 by adjusting the amount of air packed in the air spring 4. As the air spring 4, it is possible to enumerate, for example, the Sumimount (trade name) of Sumitomo Electric Industries, Ltd. As an alternative to the air spring 4, an oil dumper or the like is usable.

As shown in the circled enlarged views in Figs. 3 and 4, the air spring 4 includes an upper piece portion 40, a lower piece portion 41, and an elastic portion 42. The upper piece portion 40 is a member that is to be fixed to the attachment portion 21 (22) and that has high rigidity. The lower piece portion 41 is a member that serves as a base in contact with a placement surface (the container bottom surface 30 in the present example) on which the cell stack 2 is placed. The elastic portion 42 is a member that is disposed between the upper piece portion 40 and the lower piece portion 41 and that is constituted by an elastic body of rubber or the like, and air is packed inside the elastic portion 42. It is acceptable that a plurality of stages of the elastic portions 42 are stacked.

### «Effects»

In the RF battery transport structure 1 having the aforementioned configuration, it is possible to suppress the vibration of the cell stack 2 by the vibration absorbing members 4 that vertically support the cell stack 2 from below. Therefore, the cell stack 2 is suppressed from being applied with a large inertial force, for example, even when the container 3 is subjected to vibration or even when a shock is applied to the container 3. As a result, it is possible to suppress the cell stack 2 from being damaged during transport, and it is possible to smoothly install and operate the redox flow battery after transport.

### «Other»

At an installation place of the RF battery, the cell stack 2 is fixed to an installation surface via an insulator such as an epoxy. Therefore, the air springs 4 that have been attached to the attachment portions 21 and 22 during transport are replaced with insulators. Here, the air springs 4 include the elastic portions 42, which have insulating properties; thus, if the elastic portions 42 have predetermined insulation performance, there is a possibility that the air springs 4 are usable as alternatives to the insulators. In this case, it is possible to reduce labor for replacing the air springs 4 with insulators.

### «Experimental Example»

In an experimental example, an acceleration sensor was attached to an upper-end center portion of the end plate 210 shown in Figs. 3 and 4, and the inertial force in the vertical direction applied to the cell stack 2 during load and discharge of the container 3 was measured. As a result, the inertial force applied to the cell stack 2 was found to be 3 G or less. In contrast, when the air springs 4 of the cell stack 2 in Figs. 3 and 4 were replaced with rigid support bases and the inertial force in the aforementioned vertical direction was measured, the inertial force was as high as approximately 10 G. These results clearly indicate that the air springs is capable of greatly reducing the inertial force applied to the cell stack 2 during transport.

### <Second Embodiment>

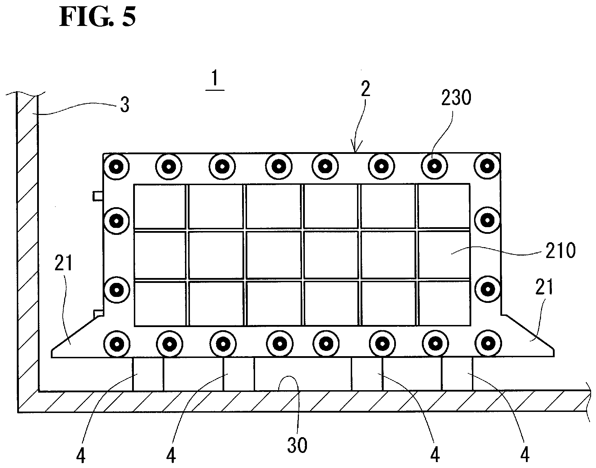

In a second embodiment, an example in which damping rubbers are used as the vibration absorbing members 4 will be described on the basis of Fig. 5.

In the RF battery transport structure of the present example shown in Fig. 5, each of the end plate 210 and the other end plate 220 (refer to Fig. 2), which is hidden on the deeper side of the figure, is provided with four of the damping rubbers 4. Preferably, the damping rubbers 4 are provided so as to be spaced from each other with a substantially identical gap therebetween in the left-right direction of the figure. The number of the damping rubbers 4 is not particularly limited. In addition, the damping rubbers 4 may be a natural rubber or may be a synthetic rubber. As the synthetic rubber, a chloroprene rubber (polychloroprene), an ethylene propylene rubber and the like are suitably usable.

The damping rubbers 4 are capable of maintaining its vibration absorption ability for a long period and are thus desirable as the vibration absorbing members during transport. In particular, the damping rubbers 4 is capable of absorbing the vibration during transport, with certainty for a long period, when sea transport and long-haul land transport are performed.

### Reference Signs List

1 redox flow battery transport structure (RF battery transport structure)
   2 cell stack
      21,22 attachment portion 21A, 21B triangular plate portion 21C rectangular plate portion
   3 container
      30 container bottom surface
   4 vibration absorbing member (air spring or damping rubber)
      40 upper piece portion 41 lower piece portion 42 elastic portion
α redox flow battery (RF battery)
100 battery cell 101 membrane 102 positive electrode cell 103 negative electrode cell
   100P positive electrolyte circulation mechanism 100N negative electrolyte circulation mechanism
   104 positive electrode 105 negative electrode 106 positive electrolyte tank
   107 negative electrolyte tank 108, 109, 110, 111 conduit pipe
   112, 113 pump
   120 cell frame 121 bipolar plate 122 frame body
   123, 124 liquid supply manifold
   125, 126 liquid discharge manifold
   127 sealing member
   190 supply/discharge plate 210, 220 end plate
200 cell stack 200s substack
   230 fastening mechanism

## Claims

1. A redox flow battery transport structure comprising:
a cell stack that includes a plurality of stacked layers of battery cells of a redox flow battery;
a container in which the cell stack is housed; and
a vibration absorbing member that vertically supports the cell stack from below in the container.

2. The redox flow battery transport structure according to Claim 1, wherein the vibration absorbing member is a damping rubber.

3. The redox flow battery transport structure according to Claim 1, wherein the vibration absorbing member is an air spring.

4. The redox flow battery transport structure according to any one of Claims 1 to 3,
wherein the cell stack includes a pair of end plates that hold and fasten a layered structure from both ends thereof, the layered structure including the plurality of stacked layers of battery cells, and
wherein each of the end plates includes, at a vertically lower portion thereof, an attachment portion to which the vibration absorbing member is attached.

5. A redox flow battery transport method comprising: housing a cell stack that is vertically supported from below by a vibration absorbing member in a container, the cell stack including a plurality of stacked layers of battery cells of a redox flow battery; and transporting the container.

6. A redox flow battery comprising:
a cell stack that includes a plurality of stacked layers of battery cells of a redox flow battery; and
a vibration absorbing member that vertically supports the cell stack from below.
